# DEMANDE DE BREVET EUROPEEN

(11) **EP 0 756 393 A1**
(43) Date de publication de la demande: **29.01.1997**
(21) Numéro de dépôt: 96401673.7
(22) Date de dépôt: 25.07.1996
(51) Int. Cl.: H04H 1/02

(54) **Procédé et dispositif de transmission de services multimédia sur réseau privé large bande**

(30) Priorité: 26.07.1995 FR 9509072
(71) Demandeur: THOMSON BROADCAST SYSTEMS, 95801 Cergy Pontoise Cedex (FR)
(72) Inventeur: Pirat, Patrick, 92050 Paris la Defense Cedex (FR)
(74) Mandataire: Ruellan-Lemonnier, Brigitte

(57) **Abrégé**

Les canaux du plan de fréquence autorisé par le support du réseau sont exploités pour la transmission de services analogiques et d'autres canaux de ce plan de fréquence sont utilisés pour la transmission de services numériques. Les données numériques correspondant aux services numériques subissent une modulation numérique (5.i), le signal obtenu étant ensuite transposé en fréquence (6.i), les signaux analogiques correspondant aux services analogiques sont également transposés en fréquence (6.j), l'ensemble des signaux transposés étant ensuite multiplexé en fréquence (8) pour être transmis sur le réseau.

Les applications concernent la distribution de services pour hôtels, hôpitaux, trains, avions, ...

## Description

L'invention concerne les réseaux privés à large bande à contrôle d'accès centralisé.

Ces réseaux ont pour objet de distribuer des services de façon interne, c'est à dire en différents points de bâtiments tels qu'hôtels, hôpitaux, ... ou de véhicules à usage collectif tels que trains, avions, ... afin de pouvoir être exploités, de manière indépendante, par les usagers.

Ils se caractérisent, entre autres, par un support, câble coaxial, fibre optique une topologie physique, bus, étoile, arbre ..., et un mécanisme de contrôle d'accès.

Des réseaux numériques à protocoles d'accès répondant à des normes tels les réseaux numériques de type éthernet, anneau à jeton ou token ring en anglais sont à contrôle décentralisé et ne sont pas concernés par cette invention. Ainsi, plutôt que de réseau local, terme généralement réservé à ce type de transmission numérique avec protocole, on parlera ici de réseau privé à couverture limitée.

Les réseaux privés large bande aujourd'hui installés concernent, pour la plupart, des applications basées sur des techniques analogiques : distribution de programmes audio et TV, téléphonie, etc.

Or le développement des techniques numériques pour le transport et l'archivage de programmes audio et vidéo, permet aux opérateurs de services de proposer aujourd'hui des applications de distribution de programmes TV à la demande : télé-achat, télé-divertissement, ... Il permet également de fournir des services interactifs donc avec échange de données.

De telles applications ne sont malheureusement pas exploitables sur les réseaux distribuant des services analogiques, non compatibles de la gestion de données numériques.

La traduction en signaux analogiques ferait perdre tout avantage de ces techniques numériques et la solution, pour une telle exploitation, est donc le remplacement d'un réseau existant par un réseau de transmission de données numériques. Mais l'infrastructure existante n'est généralement pas adaptée à de tels réseaux. Par exemple, les réseaux numériques de type ATM, de l'anglais Asynchronous Transfer Mode ne sont pas compatibles, quand à leur architecture, des réseaux existants qui ont généralement une topologie de type bus passif, c'est à dire où tous les usagers reçoivent les mêmes informations. Les coûts d'infrastructure pour l'installation de tels réseaux numériques sont alors importants et cette solution est financièrement lourde. D'autre part, elle fait perdre toute compatibilité avec les systèmes antérieurs, pouvant entraîner une gène dans l'utilisation des terminaux due à des modifications d'habitudes trop brutales demandées aux utilisateurs ainsi que l'impossibilité de valoriser les investissements déjà effectués dans ce domaine sans avoir recours à des dispositifs complexes et coûteux de numérisation des sources analogiques.

L'invention a pour but de pallier les inconvénients précités.

Elle a pour objet un procédé de transmission de services multimédia sur un réseau privé large bande, caractérisé en ce que certains des canaux du plan de fréquence autorisé par le support du réseau sont exploités pour la transmission de services analogiques et d'autres canaux de ce plan de fréquence sont utilisés pour la transmission de services numériques, en ce que les données numériques correspondant aux services numériques subissent une modulation numérique, le signal obtenu étant ensuite transposé en fréquence, en ce que les signaux analogiques correspondant aux services analogiques sont transposés en fréquence et en ce que les signaux transposés sont multiplexés en fréquence pour être transmis sur le réseau.

Elle a également pour objet un dispositif de transmission de services multimédia et un récepteur pour de tels services.

Les avantages de l'invention sont la cohabitation possible, sur la même infrastructure, d'applications reposant sur des services "analogiques" et "numériques".

L'invention permet une évolution progressive des services offerts et ainsi, de conserver les applications existantes.

Elle permet d'exploiter des services numériques de distribution et des services numériques interactifs, c'est à dire avec échange de données, pour un coût modéré dû à l'utilisation de l'infrastructure existante.

Les caractéristiques et avantages de la présente invention ressortiront mieux de la description suivante, donnée à titre d'exemple non limitatif et en référence aux figures annexées où :
- La figure 1 représente un diagramme fonctionnel d'un système de transmission de services multimédia selon l'invention.
- Les figures 2, 3, 4, des topologies de réseaux de transport et de distribution des services, respectivement de type bus, étoile, bus-étoile.
- La figure 5 un dispositif de multiplexage des services selon l'invention.
- La figure 6 un plan de fréquences.
- La figure 7 un récepteur relié au réseau.

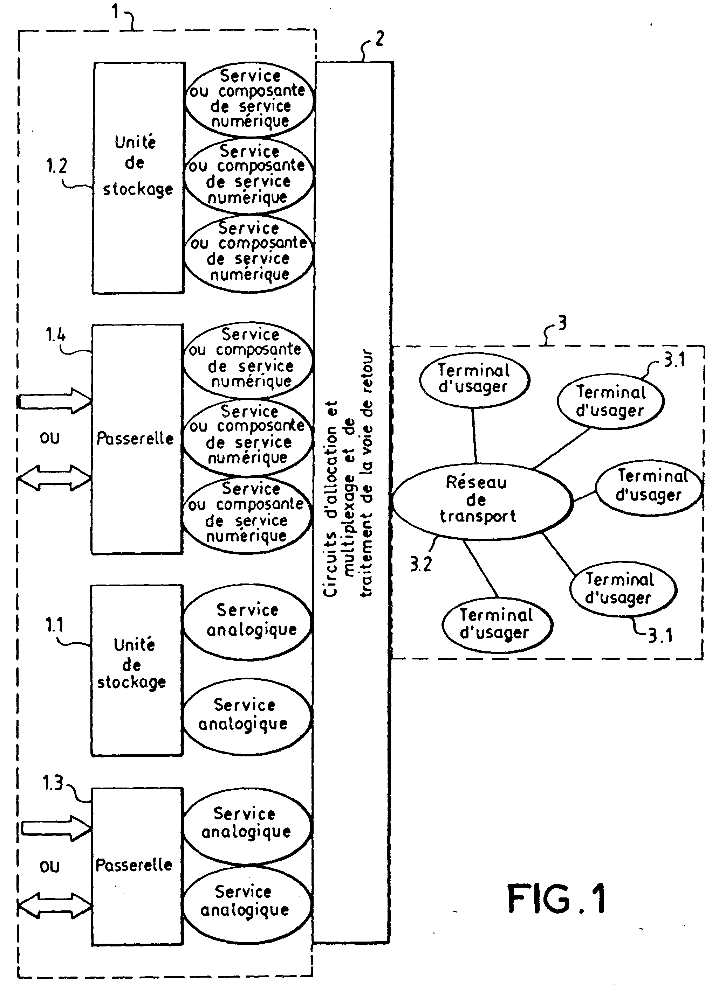

La figure 1 représente un diagramme fonctionnel d'un système de transmission de services multimédia selon l'invention.

Ces services multimédia peuvent se définir de différentes manières.

Ils peuvent être définis par leur type :
- services de distribution : le flux d'information délivré par la source vers les usagers est unidirectionnel. C'est par exemple le cas de programmes audio ou vidéo diffusés à tous les usagers.
- services interactifs : l'échange d'informations entre la source et les usagers ou entre les usagers eux-mêmes est bidirectionnel. C'est par exemple le cas des services conversationnels (téléphone, ...), de messagerie et de consultation (accès à des bases de données multimédia, vidéo à la demande, jeux, ...). Ce type de services exige sur le réseau la présence d'une voie de retour pour acheminer le flux d'informations ou de commandes de l'usager vers la source du service. Les informations descendantes (c'est à dire de la source vers l'usager) du service qui est alloué doivent également être identifiées afin de pouvoir être présentées sélectivement à l'usager, cette sélection s'effectuant au niveau du terminal d'usager.

Ils peuvent également se caractériser par leur nature :
- services analogiques : par exemple les programmes de télévision codés en PAL, SECAM ou NTSC, les programmes audio, le téléphone, ...
- services numériques : un service est alors généralement composé de plusieurs composantes élémentaires. Par exemple un programme TV possède une composante vidéo (éventuellement compressée), une composante audio, une ou plusieurs composantes de "service" liées au service (texte de sous-titrage par exemple) et que l'on appellera composantes d'informations pour éviter toute ambiguïté. Ces composantes peuvent être acheminées séparément vers le récepteur qui les assemble correctement pour les présenter à l'usager.

La structure générale du système de distribution de ces services représenté à la figure 1 peut se diviser en 3 parties principales :
- les circuits de génération de services internes et d'accès à des services extérieurs 1,
- les circuits d'allocation et multiplexage et de traitement de la voie de retour 2,
- le réseau de transport et de distribution 3.

Les circuits de génération de services internes et d'accès à des services extérieurs, regroupés dans le cadre en pointillés 1 représenté sur la figure 1 génèrent ou donnent accès à différents services distribués sur le réseau par l'intermédiaire de circuits d'allocation et multiplexage et de traitement de la voie de retour 2.

Les circuits de génération comprennent des unités de stockage 1.1, 1.2, c'est à dire des dispositifs d'enregistrement et de lecture de données analogiques 1.1 ou numériques 1.2.

Dans le premier cas, données analogiques, ces unités de stockage 1.1 ne délivrent qu'un service à la fois, par exemple à partir d'un magnétoscope, d'un magnétophone, d'un vidéodisque, ...

Dans le second cas, les composantes d'un service numérique sont enregistrées sous forme compressée sur des équipements d'enregistrement numérique tels que disque magnétique, disque optique, mémoire vive, etc. En raison des forts taux de compression qu'on peut atteindre aujourd'hui, ces composantes peuvent être lues à des vitesses relativement faibles, ce qui permet l'usage de dispositifs d'enregistrement à accès aléatoire tels que disques, ..., ainsi que la lecture de plusieurs composantes en même temps. Des services numériques peuvent donc être transmis simultanément. Les caractéristiques propres au numérique et à la compression qu'il autorise permettent d'offrir des services à forte interactivité.

Les circuits d'accès comprennent des passerelles 1.3, 1.4, permettant d'accéder à des services extérieurs au système. Ces services peuvent être des services de distribution, par exemple des programmes audio ou vidéo, ou des services interactifs tels que le téléphone (télécopie, visioconférence, etc.). Dans le premier cas la passerelle agit comme un récepteur, dans le second cas la passerelle agit comme un émetteur-récepteur. Ces services extérieurs peuvent être transportés sous forme analogique (passerelle 1.3) ou numérique (passerelle 1.4).

Les circuits d'allocation et multiplexage et de traitement de la voie de retour 2 ont pour rôle de traiter les informations disponibles à leurs entrées et de les mettre en forme avant de les transmettre sur le réseau pour être reçues sélectivement par les terminaux d'usagers, cette sélection se faisant au niveau du terminal ou récepteur et, dans le cas d'échanges bidirectionnels, pour être transmises aux circuits de génération et de transfert de services. Ainsi, les services ou composantes de services numériques interactifs sont d'abord étiquetés par le dispositif d'allocation puis multiplexés avant d'être transmis sur le réseau de transport, cet étiquetage permettant au récepteur de sélectionner les composantes de services numériques. Les services analogiques diffusés, destinés a priori à tous les usagers, sont seulement multiplexés.

Le réseau de transport et de distribution 3 comprend les terminaux des usagers 3.1 et le réseau de transport (ou support de transmission) proprement dit 3.2, c'est à dire tout ce qui permet la transmission des données entre les circuits d'allocation et de multiplexage et les terminaux des usagers, la transmission pouvant être réalisée dans les deux sens dans le cas où des services interactifs sont proposés.

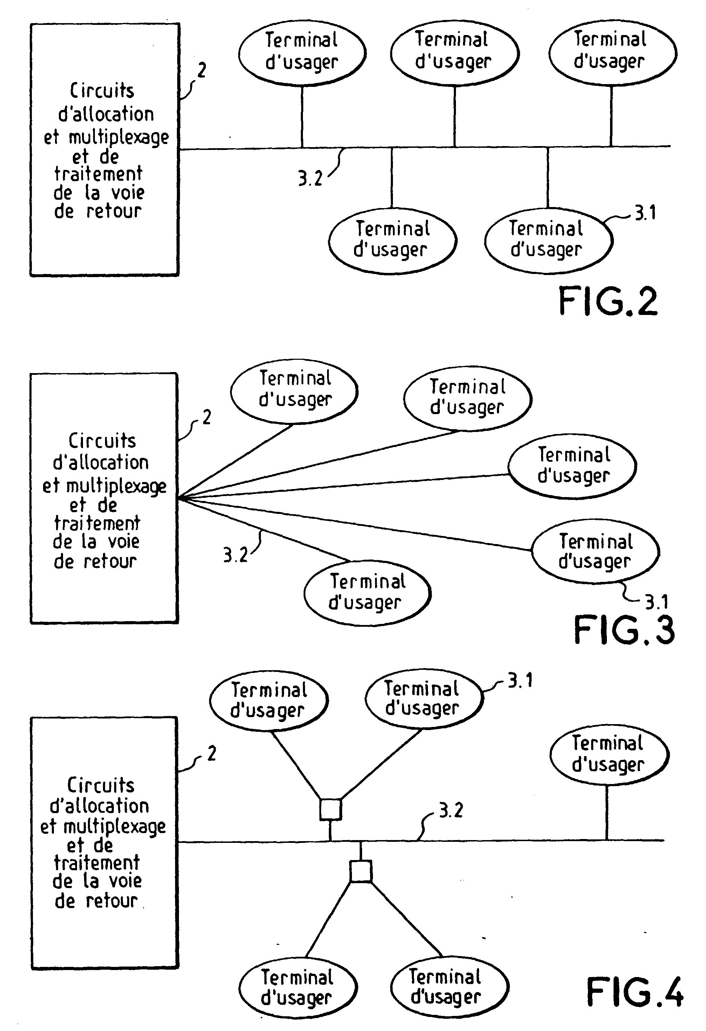

Les réseaux ici concernés sont principalement de type bus passif, c'est à dire que les équipements (les terminaux d'usagers) reçoivent tous les mêmes informations. Ces équipements sont généralement interconnectés en dérivation sur une même liaison, comme le représente la figure 2, mais la topologie peut tout aussi bien être de type étoile, où chaque terminal 3.1 est relié directement aux circuits de multiplexage 2 par le support physique du réseau de transport 3.2, ces circuits se chargeant alors de transmettre les mêmes informations aux terminaux, ou de type bus-étoile où les récepteurs 3.1 sont regroupés par sous-ensembles avant d'être reliés au bus, tels que représentés respectivement aux figures 3 et 4.

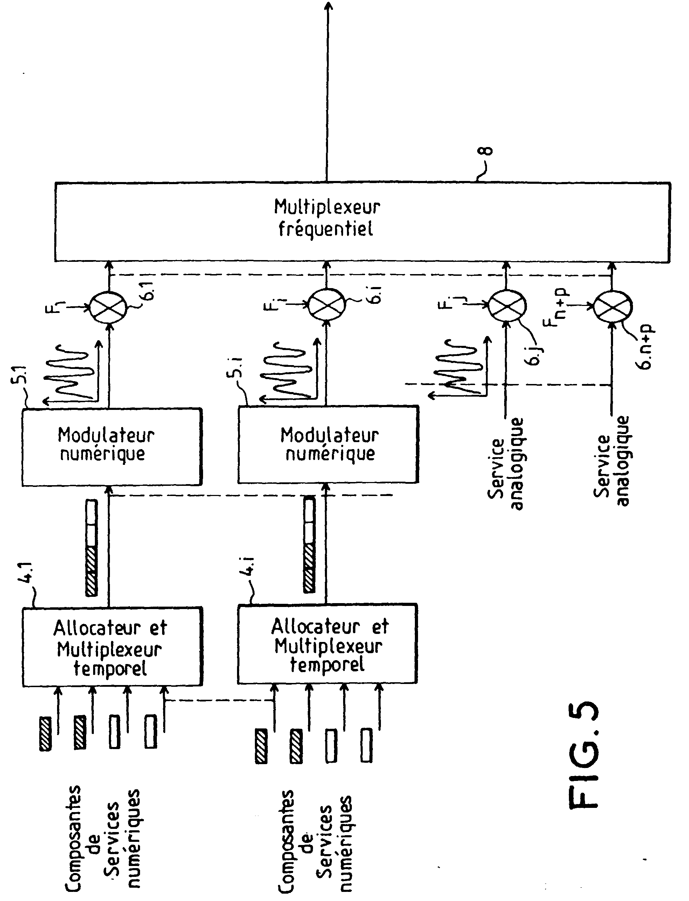

La figure 5 représente le principe de multiplexage selon un mode de réalisation de l'invention.

La bande de fréquence autorisée par le réseau de transport 3.2 est découpée en canaux de transmission, de largeur de bande liée à la bande de fréquence des signaux à transmettre. Ces canaux sont attribués au transport des services analogiques et à celui des services numériques, la répartition se faisant en fonction du nombre de services analogiques et de la quantité d'informations des services numériques à distribuer sur le réseau. On notera n le nombre de canaux i nécessaires à la transmission des services numériques et p le nombre de canaux j nécessaires à la transmission des services analogiques. Le nombre de services numériques transmis sur un canal dépend du débit de chacune de leurs composantes et de la largeur de bande du canal i.

Les composantes d'un premier groupe de services numériques à transmettre sur un premier canal sont présentées sur les entrées d'un allocateur d'étiquettes et multiplexeur temporel 4.1 qui a pour rôle d'attribuer une étiquette à chaque composante et d'effectuer, d'une manière connue, un multiplexage temporel des composantes présentes à l'entrée du circuit pour fournir un train binaire de données numériques.

La sortie de l'allocateur et multiplexeur 4.1 est transmise à l'entrée d'un modulateur numérique 5.1. Les données numériques multiplexées sont ainsi modulées pour fournir, en sortie du circuit 5.1 un signal analogique. Le type de modulation numérique choisi est adapté au support de transmission. Il s'agit par exemple de :
- MDP pour Modulation par Déplacement de Phase ou QPSK de l'anglo-saxon Quadrature Phase Shift Keying.
- MAQ pour Modulation d'Amplitude en Quadrature à 16, 32, 64, 128, 256 points par constellation, ou QAM de l'anglo-saxon Quadrature Amplitude Modulation.
- OFDM à 16, 32, 64, 128, ou 256 points de l'anglo-saxon Orthogonal Frequency Division Multiplex.

L'efficacité de ces techniques permet de transmettre un fort débit binaire dans une bande limitée. A titre d'exemple, la modulation 64 QAM retenue par le projet européen DVB de l'anglo-saxon Digital Video Broadcasting pour la distribution de programmes numériques sur les réseaux câblés offre un débit d'environ 40 Mbit/s dans une bande passante de 8 MHz.

La sortie du circuit 5.1 est reliée à une première entrée d'un transposeur de fréquence 6.1. Sur la deuxième entrée est envoyé un signal sinusoïdal de fréquence F1 définissant ce canal dans le plan de fréquence autorisé par le support de transmission, canal affecté à la transmission de ce premier groupe de services numériques. La sortie du transposeur de fréquence 6.1 est reliée à une première entrée d'un multiplexeur fréquentiel 8 fournissant ainsi, sur cette entrée, le signal analogique provenant du modulateur numérique et transposé dans la bande de fréquence F1 (ou canal F1), elle-même dans la bande passante autorisée par le support de transmission.

De même, les composantes numériques du ième groupe de services numériques sont transmises aux entrées d'un allocateur et multiplexeur temporel 4.i. La sortie de l'allocateur et multiplexeur temporel 4.i est reliée à l'entrée d'un modulateur numérique 5.i et la sortie de ce modulateur à l'entrée d'un transposeur de fréquence 6.i dont la deuxième entrée est alimentée par un signal sinusoïdal de fréquence Fi correspondant à un canal i du plan de fréquence. Le signal transposé en fréquence est ensuite transmis à l'entrée du multiplexeur fréquentiel 8.

On a ainsi n circuits analogues, i variant de 1 à n, et le nombre d'entrées du multiplexeur correspondant à ces services numériques est de n.

Les signaux provenant des sources analogiques sont également transposés en fréquence.

Chaque canal j transporte un service analogique. Le nombre p de canaux nécessaires est donc égal au nombre de services analogiques à distribuer.

Le signal modulé d'un service analogique j est transmis sur une première entrée d'un transposeur de fréquence 6.j dont la deuxième entrée est alimentée par un signal sinusoïdal de fréquence Fj. La sortie du transposeur de fréquence est reliée à une entrée du multiplexeur fréquentiel 8. Le nombre de transposeurs ainsi nécessaires est donc de p, j variant de n + 1 à n + p.

Le multiplexeur fréquentiel, qui est par exemple un coupleur, possède ainsi au moins n + p entrées. Les valeurs de n et p ne sont en fait limitées que par la bande passante globale du réseau et peuvent bien sûr être choisies plus grandes que celles nécessaires au transport des services prévus pour permettre les extensions futures à de nouveaux services analogiques et numériques.

La largeur de bande peut être la même pour les canaux supportant des services analogiques et ceux supportant des services numériques. Ceci permet d'utiliser le même tuner dans le terminal d'usager. Les valeurs de 6, 7, 8 MHz utilisées dans les réseaux câblés européens et américains peuvent être recommandées.

La sortie du multiplexeur fréquentiel 8 est reliée au réseau de transport. Ce multiplexage en fréquence permet de transporter sur un même support physique l'ensemble des services numériques et analogiques, un canal correspondant à la fois à une bande de fréquence bien déterminée et à un service ou groupe de services particulier, les différents canaux étant répartis dans la bande passante disponible du support.

Ce procédé de multiplexage offre d'autre part aux services numériques un débit important qui permet de satisfaire un nombre élevé d'usagers.

Supposons, par exemple, que le support physique soit un câble coaxial. Sa bande passante est d'environ 800 MHz. Si la largeur des canaux est de 8 MHz, on dispose alors de 100 canaux. Si 20 de ces canaux sont alloués à la diffusion de programmes TV analogiques (PAL, SECAM, ...), il reste 80 canaux disponibles pour les services numériques. A raison d'un débit de 40 Mbit/s par canal qu'on peut obtenir avec une modulation de type QAM 64, le système peut transporter 3200 Mbit/s d'informations.

Sachant que le débit d'un programme TV de qualité acceptable est après compression d'environ 4 Mbit/s, le système permet de transporter 800 programmes TV.

Une conséquence de la technique de multiplexage décrite précédemment est que tous les services sont acheminés vers tous les usagers. Afin que chaque usager recouvre le service qui lui est destiné, un dispositif de tri peut être mis en place.

Pour les services analogiques, il suffit de sélectionner le canal dans lequel le service a été transporté. Cette opération est effectuée par un tuner situé dans le terminal d'usager.

Pour les services numériques, la sélection se fait en deux temps :
- sélection du canal dans lequel le service a été multiplexé et modulé;
- sélection dans le train numérique résultant de l'opération précédente, des informations associées au service choisi, par démultiplexage temporel. La reconnaissance des informations associées à un service peut par exemple utiliser les techniques de transport (c'est à dire le multiplexage et l'étiquetage) spécifiées par les normes MPEG Systems (de l'anglo-saxon Motion Picture Expert Group) ou ATM (Asynchronous Transfer Mode). Il conviendra alors d'avoir alloué selon les mêmes techniques les composantes d'informations lors de l'opération de multiplexage temporel effectuée par l'allocateur et multiplexeur temporel 4.i décrit précédemment. Ainsi, exploitant une structure ou une procédure connue pour la transmission des données numériques (cellules, transmission par paquets, ...), il pourra être fait appel à des circuits standards existant dans le commerce.

Les services à distribuer peuvent être de type interactifs. L'interactivité exige alors du système la mise à disposition d'une voie montante (ou voie de retour) des récepteurs vers les unités de stockage ou les passerelles. Cette voie de retour peut être transportée par un support physique différent de celui qui assure le transport des services descendants. Il est également possible de multiplexer la voie de retour dans le plan de fréquence du support, ce qui présente l'avantage de rendre le système compatible des infrastructures à un seul support physique

La partie du plan de fréquence affectée à la voie montante peut être partagée par tous les usagers. L'allocation de cette ressource est alors résolue par des méthodes classiques d'accès à une ressource partagée. En particulier, on pourra utiliser les techniques TDMA de l'anglo-saxon Time Division Multiple Access.

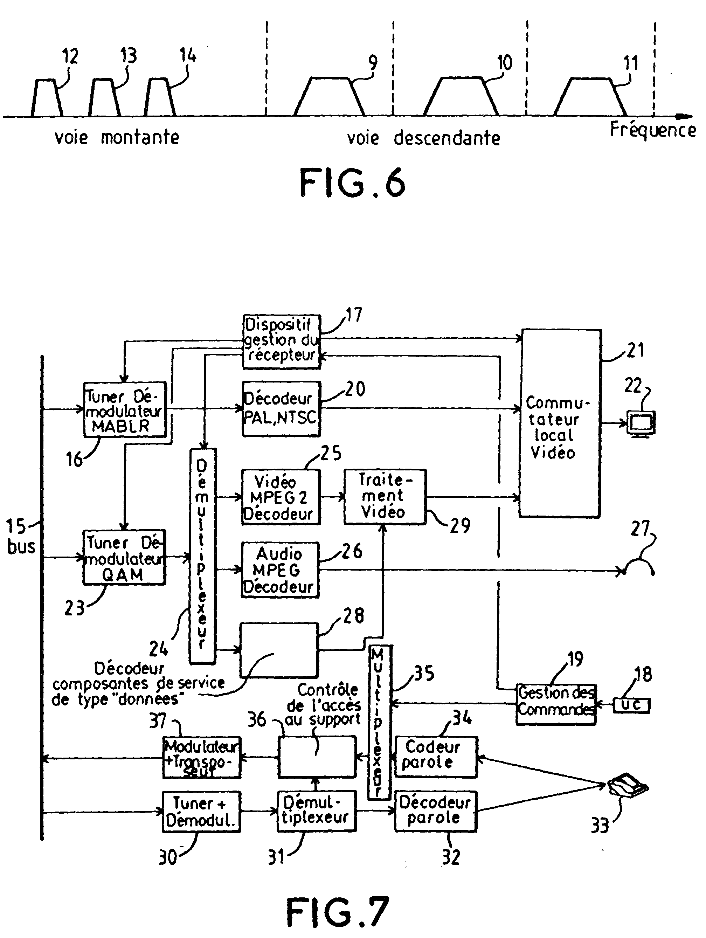

Un exemple intéressant d'utilisation de la voie montante est le service téléphonique dont un plan de fréquence peut être représenté selon la figure 6.

Parmi les canaux de la voie descendante 9, 10, 11, ... le canal 9 est par exemple dédié au service téléphonique et transmet les signaux téléphoniques numériques à l'ensemble des récepteurs d'usagers, les étiquettes permettant de faire la sélection au niveau de ces récepteurs. Les informations descendantes destinées à plusieurs usagers sont ainsi multiplexées et modulées dans le même canal.

Un certain nombre de canaux 12, 13, 14, ... sont réservés à la voie montante. Le canal 12 est par exemple dédié au service téléphonique. Les informations montantes concernant ce service se partagent alors ce canal de la voie montante, par exemple selon une technique TDMA. En effet, plusieurs usagers pouvant émettre en même temps, une gestion d'accès au bus est nécessaire.

Les circuits d'allocation et multiplexage et de traitement de la voie de retour 2 comprennent alors un tuner couplé sur le réseau permettant de sélectionner le canal correspondant à la voie de retour, un démodulateur numérique pour récupérer les informations numériques, puis des circuits spécifiques au démultiplexage temporel TDMA permettant d'affecter les données reçues de chaque abonné.

Il peut ainsi être envisagé plusieurs canaux sur la voie de retour pouvant nécessiter plusieurs de ces tuners si, par exemple, le débit d'informations à transmettre excède la capacité d'un canal.

Un exemple d'architecture de récepteur mettant en oeuvre ces différentes opérations est illustré à la figure 7.

Le bus 15 du réseau est relié, par couplage, à trois tuners et à un transposeur de fréquence.

Un premier tuner + démodulateur 16 sélectionne le canal défini par un dispositif de gestion du récepteur 17 recevant les commandes de l'usager. L'unité de commande de l'usager 18 (télécommande) actionne un circuit de gestion des commandes 19 relié au dispositif de gestion du récepteur 17. Le circuit 16 réalise également une démodulation d'amplitude du signal par l'intermédiaire d'un démodulateur MABLR, prenant pour hypothèse que les services analogiques reçus sur la première entrée des transposeurs 6.j de la figure 5 ont préalablement subi une Modulation d'Amplitude à Bande Latérale Résiduelle ou MABLR, modulation habituellement utilisée pour la transmission par câble de signaux de télévision.

Le signal analogique démodulé est ensuite transmis à un décodeur PAL, SECAM, ou NTSC 20 selon la norme du signal reconnue pour fournir une image vidéo sur une première entrée d'un commutateur local vidéo 21. Par l'intermédiaire des commandes à la disposition de l'usager transmis par le dispositif de gestion du récepteur 17 et selon sa sélection, ce commutateur est actionné pour fournir une image vidéo sur un écran de visualisation 22 provenant soit de cette première entrée, c'est à dire des services analogiques, soit d'une deuxième entrée, c'est à dire de services numériques comme indiqué ci-après.

Un deuxième tuner + démodulateur 23 couplé au bus sélectionne le canal défini par le dispositif de gestion du récepteur 17 recevant les commandes de l'usager. Il réalise également une démodulation d'amplitude du signal par l'intermédiaire d'un démodulateur QAM, prenant pour hypothèse que les modulateurs numériques 5.i de la figure 5 réalisent une modulation numérique de type QAM. Les informations numériques disponibles en sortie sont transmises à un démultiplexeur 24 qui, en fonction des commandes provenant du dispositif de gestion du récepteur 17 réalise le démultiplexage du train binaire reçu, pour ne transmettre, sur des sorties séparées, que les composantes du service numérique sélectionné par l'usager. Ainsi, sur une première sortie, la composante vidéo est disponible pour être transmise sur l'entrée d'un circuit de décodage MPEG 25 (les composantes numériques sont supposées codées MPEG). La deuxième sortie correspond au signal audio et est décodée séparément par un décodeur MPEG 26 avant d'être transmise sur le casque 27 de l'usager. La troisième sortie correspond à une composante de service dite composante d'informations (sous-titrage...) et est reliée à un décodeur également de type MPEG 28. Les données décodées provenant du décodeur vidéo 25 et du décodeur 28 sont transmises vers un circuit de traitement vidéo 29 qui réalise la synchronisation des données reçues pour les transmettre vers le commutateur local 21. Cette deuxième entrée est visualisée sur le moniteur 22 lorsque un service numérique est sélectionné par l'usager.

Les services analogiques et numériques délivrés à partir de chacun de ces tuners n'étant pas exploités simultanément, il est parfaitement envisageable de n'utiliser qu'un seul tuner dont la sélection de canal est effectuée par le dispositif de gestion du récepteur, les démodulateurs étant, quant à eux, différents. La commutation de la sortie du tuner sur l'entrée d'un de modulateurs est alors également gérée par le dispositif de gestion du récepteur.

Le troisième tuner est réservé aux liaisons téléphoniques. Ce tuner + démodulateur 30 sélectionne le canal correspondant et démodule le signal analogique reçu pour fournir les informations sous forme numérique. Elles sont transmises à un démultiplexeur 31 qui extrait les données relatives à l'abonné pour, via un décodeur parole 32, les rendre exploitables par le poste téléphonique de l'abonné 33. Un codeur parole 34 code en numérique l'information analogique provenant du combiné téléphonique 33 . Les informations provenant du circuit de gestion des commandes 19 sont multiplexées avec celles provenant du combiné par l'intermédiaire d'un multiplexeur 35. La sortie du multiplexeur est reliée à un circuit de contrôle d'accès au support 36 qui transmet les données multiplexées selon la technique de TDMA. Les commandes correspondantes (autorisation d'émission...) provenant de la voie descendante, en fait de la tête de réseau, sont par exemple transmises au circuit de contrôle d'accès au support par l'intermédiaire du démultiplexeur 31. Ces données traversent un modulateur + transposeur 37 qui réalise une modulation numérique du signal reçu et une transposition de fréquence correspondant à la fréquence du canal montant pour être véhiculées par ce canal.

Les informations provenant du circuit de gestion des commandes pourraient également être transmises séparément, c'est à dire sans être multiplexées, sur un canal montant.

Ce type de récepteur permet une distribution sélective des services, le dispositif de gestion pouvant par exemple n'autoriser l'accès qu'à un certain nombre de canaux ou de services numériques.

Cette architecture n'est pas limitative. Il est tout aussi envisageable d'utiliser un même récepteur pour un groupe d'usagers. Dans ce cas, on pourra par exemple doubler ou tripler le nombre de tuners 16 et de décodeurs 20 pour la sélection de plusieurs services analogiques et le nombre de décodeurs MPEG 25, 26, 27, pour le décodage de services numériques, le démultiplexeur 24 sélectionnant alors plusieurs services numériques d'un canal. Tous ces services sont alors disponibles simultanément aux entrées du commutateur local 21. Chacun des usagers du groupe peut sélectionner un de ces services indépendamment du choix des autres usagers, les circuits de gestion des commandes 19 et le dispositif de gestion du récepteur 17 assurant cette compatibilité.

Ces services disponibles peuvent, d'autre part, être modifiés au cours du temps, permettant finalement un choix aussi important mais étendu dans le temps.

## Revendications

1. Procédé de transport et de distribution de services multimédia sur réseau privé large bande, caractérisé en ce que certains des canaux du plan de fréquence autorisé par le support du réseau sont exploités pour la transmission de services analogiques et d'autres canaux de ce plan de fréquence sont utilisés pour la transmission de services numériques, en ce que les données numériques correspondant aux services numériques subissent une modulation numérique (5.i), le signal obtenu étant ensuite transposé en fréquence (6.i), en ce que les signaux analogiques correspondant aux services analogiques sont transposés en fréquence (6.j) et, en ce que les signaux transposés sont multiplexés en fréquence (8) pour être transmis sur le réseau.

2. Procédé selon la revendication 1, caractérisé en ce que la modulation numérique est une modulation de type QPSK de l'anglo-saxon Quadrature Phase Shift Keying.

3. Procédé selon la revendication 1, caractérisé en ce que la modulation numérique est une modulation de type QAM de l'anglo-saxon Quadrature Amplitude Modulation.

4. Procédé selon la revendication 1, caractérisé en ce que la modulation numérique est une modulation de type OFDM de l'anglo-saxon Orthogonal Frequency Division Multiplex.

5. Procédé selon l'une des revendications précédentes, caractérisé en ce que les données numériques de plusieurs services numériques ou des composantes d'un ou plusieurs services numériques sont multiplexées temporellement (4.i) avant d'être modulées.

6. Procédé selon la revendication 5, caractérisé en ce que le multiplexage et l'étiquetage nécessaire à ce multiplexage (4.i) sont réalisés selon les normes définies par MPEG Systems de l'anglo-saxon Motion Picture Expert Group.

7. Procédé selon la revendication 5, caractérisé en ce que le multiplexage et l'étiquetage nécessaire à ce multiplexage (4.i) sont réalisés selon les normes ATM de l'anglo-saxon Asynchronous Transfer Mode.

8. Procédé selon l'une des revendications précédentes, caractérisé en ce qu'une partie du plan de fréquence est réservée à une voie montante pour transmettre en retour les signaux numériques assurant l'interactivité.

9. Procédé selon la revendication 8, caractérisé en ce que le ou les canaux affectés à la voie montante sont partagés par les usagers.

10. Procédé selon la revendication 9, caractérisé en ce que le ou les canaux affectés à la voie montante sont partagés selon la technique TDMA de l'appellation anglaise Time Division Multiple Access.

11. Procédé selon l'une quelconque des revendications précédentes, caractérisé en ce que le réseau (3.2) est du type bus, étoile, ou bus-étoile.

12. Dispositif de transport et de distribution de services multimédia sur réseau privé à large bande, caractérisé en ce qu'il comporte des circuits de modulation numérique (5.i) de signaux numériques provenant de services numériques, des circuits de transposition de fréquence (6.i) de ces signaux modulés, et des circuits de transposition de fréquence (6.j) de signaux analogiques modulés provenant de services analogiques.

13. Dispositif selon la revendication 12, caractérisé en ce qu'il comporte des circuits de multiplexage temporel (4.i) des signaux numériques de services numériques ou composantes de services numériques.

14. Récepteur de services multimédia sur réseau privé à large bande, caractérisé en ce qu'il comporte un tuner (16, 23, 30) pour la sélection d'un canal correspondant à un service analogique ou numérique, un démodulateur numérique (23) pour la démodulation du signal du canal correspondant au service numérique, et un démodulateur analogique (16) pour la démodulation du signal du canal correspondant au service analogique.

15. Récepteur selon la revendication 14, caractérisé en ce qu'il comporte un démultiplexeur (24, 31) pour le démultiplexage de services numériques ou de composantes numériques de services numériques.

16. Récepteur selon la revendication 14, caractérisé en ce qu'il comporte un modulateur et transposeur (37) pour émettre des données sur une voie de retour.
